## Europäisches Patentamt
## European Patent Office
## Office européen des brevets

(19)

(11) Veröffentlichungsnummer: **0 108 860**
**B1**

(12)

# EUROPÄISCHE PATENTSCHRIFT

(45) Veröffentlichungstag der Patentschrift:
**31.08.88**

(51) Int. Cl.⁴: **B 23 K 20/08**, B 21 D 26/08,
F 16 L 13/14

(21) Anmeldenummer: **83105650.2**

(22) Anmeldetag: **09.06.83**

(54) **Verfahren zur Herstellung von Apparaten, Rohren und dergleichen mit einer Blechauskleidung beziehungsweise -umkleidung.**

(30) Priorität: **20.10.82 DE 3238776**

(43) Veröffentlichungstag der Anmeldung:
**23.05.84 Patentblatt 84/21**

(45) Bekanntmachung des Hinweises auf die Patenterteilung:
**31.08.88 Patentblatt 88/35**

(84) Benannte Vertragsstaaten:
**AT BE CH DE FR GB IT LI NL SE**

(56) Entgegenhaltungen:
**DE-B-1 527 243**
**FR-A-1 381 594**
**US-A-2 779 279**
**US-A-3 024 526**
**US-A-3 060 879**
**US-A-3 066 389**
**US-A-3 290 771**

(73) Patentinhaber: **Heraeus Elektroden GmbH,**
**Heraeusstrasse 12 - 14, D-6450 Hanau/Main (DE)**

(72) Erfinder: **Heinke, Harri, Feldstrasse 4, D-6455**
**Erlensee (DE)**
Erfinder: **Schreiber, Franz, Dr., Rüdigheimer-**
**Strasse 8, D-6450 Hanau (DE)**
Erfinder: **( )**
Erfinder: **( )**

(74) Vertreter: **Heinen, Gerhard, Dr., W.C. Heraeus**
**GmbH Zentralbereich Patente und Lizenzen**
**Heraeusstrasse 12- 14, D-6450 Hanau (DE)**

LIBER, STOCKHOLM 1988

EP 0 108 860 B1

### Beschreibung

Die Erfindung betrifft ein Verfahren zum Aus- oder Umkleiden von vorgeformten, dickwandigen Werkstücken, wie Rohren, Apparaten, insbesondere für den chemischen Apparatebau, mit mindestens einem dünnen Blech bzw. einer Folie aus hochwertigen metallischen Werkstoffen, wie Ti, Nb, Ta, Zr, Ni, Mo, Pt, Ir, Pd, Rh, Al, Au, Ag und deren Legierungen oder niedrig und hochlegierten Edelstählen durch linienhafte Explosionsschweißung, wobei ein Sprengstoff auf derjenigen Seite des Bleches bzw. der Folie angeordnet wird, die der Verbindungsstelle mit dem vorgeformten Werkstück abgekehrt ist und eine feste Verbindung an dem Werkstück derart erfolgt, daß auf das dünne Blech bzw. die Folie an der zu verschweißenden Stelle Sprengstoff in Form einer Schnur aufgebracht und danach gezündet wird, so daß eine Verbindung mit dem Werkstück nur im Bereich des aufgebrachten Sprengstoffs erfolgt.

Im Apparatebau wurde aufgrund der in den letzten Jahren stark gestiegenen Preise für Metall, wie Titan, Niob, Tantal, Nickel, Molybdän, Platin, Palladium, Iridium, Gold, Silber, Zirkonium und deren Legierungen in vermehrtem Maße anstelle einer Massivbauweise aus diesen Materialien auf eine Verarbeitung von plattiertem Halbzeug mit einem Grundwerkstück aus preiswerterem Material übergegangen. Das plattierte Halbzeug wird entweder durch Walzplattieren oder Explosionsplattieren hergestellt, wobei dem Explosionsplattieren dann der Vorzug zu geben ist, wenn die Metallpartner in ihrer Härte und in ihren Schmelzpunkten weit auseinanderliegen. Oft wird auch der Weg beschritten, daß z. B. eine 20 cm dicke Stahlbramme zunächst mit einem 8 mm starken Ti-Blech auf explosivem Wege plattiert und anschließend auf eine Dicke von z. B. 10 mm Stahl und 4 mm Titan als Blech ausgewalzt wird, welches dann für den Apparatebau bereitgestellt werden kann.

Bei der Weiterverarbeitung plattierter Bleche muß auf Schmelzschweißverfahren zurückgegriffen werden, wobei das Grundwerkstück und der Auflagewerkstoff jeweils einzeln untereinander zu verschweißen sind, da sonst unerwünschte Reaktionen der Metallpartner in der flüssigen Phase erfolgen würden. Eine Zusammenstellung der verschiedenen Möglichkeiten der Verfahrenstechnik beim Stumpfschweißen plattierter Bleche und auch eine neue Methode der flächenhaften, explosiven Plattierung einer Schweißnaht des Grundwerkstücks mit Auflagematerial wurde vorgenommen (DE-OS-2 310 182). Bei weit auseinander liegenden Schmelzpunkten von Grundwerkstück und Auflagewerkstoff, wie z. B. Stahl ($T_s$ = 1500° C) und Tantal ($T_s$ = 3000° C) wird zweckmäßigerweise eine Zwischenschicht aus Kupfer eingesetzt, welche aufgrund ihrer guten Wärmeleitfähigkeit die an der Tantalschweißung eingebrachte Wärme ableitet, wobei ein Aufschmelzen des Grundwerkstücks vermieden wird (DE-AS-1 905 926).

Die geschilderten Maßnahmen sind technisch aufwendig, entsprechend leidet darunter eine wirtschaftliche Fertigung. Außerdem ist das übliche Explosionsplattieren auf gewissen Mindestdicken des Auflagewerkstoffes angewiesen, um eine entsprechende Qualität der Plattierung sicherzustellen. Bei teuren Auflagewerkstoffen, wie z. B. Tantal, erhöhen aber selbst Stärken des Auflagewerkstoffes von ca. 0,8 mm noch erheblich den Preis, z. B. eines Autoklaven, wie er in der Industrie üblich ist. Um diesem Umstand abzuhelfen, wurde auch schon vorgeschlagen, einen Verbundwerkstoff, bestehend aus Kupfer, Tantal, kupferseitig auf das Kesselblech aufzuplattieren (DE-B-2 458 739 und 2 540 912).

Aus der US-A-3 024 526 ist ein Verfahren zum Explosionsverschweißen zweier metallischer Objekte, wie z. B. Platten oder Rohre, bekannt, bei dem nach Bildung eines gasgefüllten Hohlraumes an einem der Verbundpartner im Bereich der zu verschweißenden Stelle eine mit Abstand über dem Hohlraum angeordnete Sprengladung zur Explosion gebracht wird und nachfolgend durch Übertragung des Explosionsdrucks, z. B. durch Wasser, das im Hohlraum befindliche Gasvolumen komprimiert und erwärmt wird; die entstehende Wärme führt dann zur Verschweißung der Verbundpartner.

Aus der FR-A-1 381 594 ist es bekannt, Metallplatten aufeinander zu legen und eine Explosionsverschweißung mit Hilfe eine Vielzahl von Einzelkartuschen vorzunehmen. Dabei weist einer der Verbundpartner an der zu verschweißenden Stelle einen Hohlraum auf.

Aus der DE-B-1 527 243 ist es bekannt, Metallplatten ohne Zwischenraum aufeinander zu legen, in den sich überlappenden Bereichen mit einem Explosivkörper in Schnurform zu versehen und durch Explosion Schweißverbindungen in Form von Linienzügen zu erzeugen.

Dieses Verfahren wird eingesetzt, um durch linienhaftes Explosionsverschweißen einen Grundwerkstoff in Form eines Metallzylinderinnenraumes mit einem metallischen Auflagewerkstoff auszukleiden.

Derartige Auskleidungen sind als problematisch anzusehen, da mögliche Rißbildungen im Auskleidungsmaterial durch das Explosionsschweißverfahren, insbesondere bei Folien und dünnen Blechen, nicht auszuschließen sind.

Aufgabe der Erfindung ist es, an vorgeformten Werkstücken auf einfache Weise ein partielles Explosionsschweißen von Verbundpartnern, wie z. B. eines Grundwerkstücks, mit einer Blechauskleidung oder -umkleidung anzugeben. Dabei soll möglichst dünnes Blech aufgebracht werden.

Die Aufgabe wird erfindungsgemäß durch die Merkmale des Anspruchs 1 gelöst.

Weitere Ausgestaltungen der Erfindung sind den Unteransprüchen sowie der Beschreibung und den Zeichnungen von Ausführungsbeispielen zu entnehmen.

Die wesentlichen Vorteile der Erfindung sind darin zu sehen, daß ein so hergestellter Verbundwerkstoff ausreichend beständig ist gegen chemisch aggressive Medien und sich andererseits durch Vakuum weder abheben noch einbeulen läßt. Die Fertigung ist wesentlich wirtschaftlicher durch das erfindungsgemäße Verfahren, insbesondere weil sehr dünne Auflage- oder Auskleidungswerkstofe eingesetzt werden können und sich neue Anwendungen ergeben. Die Verbindungen lassen sich mit hoher Präzision herstellen, wodurch sich die Qualität des Verbundes entscheidend verbessern läßt.

In den Zeichnungen sind rein schematisch Ausführungsbeispiele der Erfindung dargestellt. Es zeigt

Figur 1    Verbundpartner mit Nuten und Sicken;

Figur 2    nach Figur 1 hergestellten Verbundkörper;

Figur 3    Verbundpartner mit Nuten und Sicken;

Figur 4    den Verbund aus Figur 3;

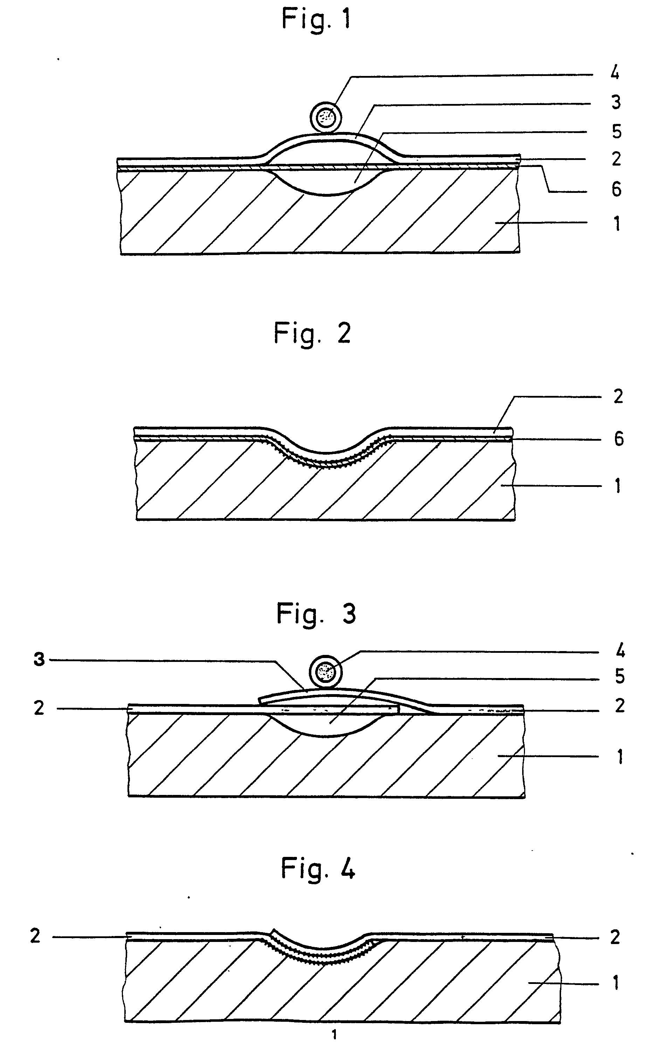

Ein fertiger Autoklav wird zunächst durch ein sogenanntes Hemd aus z. B. 0,1 mm bis ca. 1 mm starkem Tantalblech ausgekleidet und lediglich linienhaft an das Grundwerkstück geheftet. Das linienhafte Heften erfolgt durch eine lokale Explosionsschweißung. An den Stellen, wo die Haftung zu erfolgen hat, wird zuvor ein Hohlraum eingebracht, so daß zwischen Grundwerkstück und Tantalblech ein Abstand von mindestens der Dicke des Auflagematerials entsteht. Die Anordnung ist in Figur 1 im Schnitt gezeigt. Mit Bezugsziffer 1 ist das mit einer Nut 5 versehene Grundwerkstück bezeichnet, das beispielsweise aus Stahl, Edelstahl und hochlegierten Werkstoffen besteht, während der als dünnes Blech ausgebildete Auflagewerkstoff mit Ziffer 2 versehen ist. Über der Nut 5 befindet sich eine Sprengschnur bzw. -band 4, von ca. 50 mm Durchmesser, z. B. mit einer Menge von 12 mg Explosivstoff pro mm Schnurlänge. Um das dünne Tantalblech vor Beschädigungen zu schützen, die durch eine hohe Druckeinwirkung entstehen können, ist z. B. das Tantalblech 2 durch eine nichtmetallische Abdeckung geschützt (nicht dargestellt). Nach Zündung der Sprengschnur bei einer Sprenggeschwindigkeit zwischen etwa 2000 bis 9000 m/sec., bevorzugt 5,5 bis 7,5 · 10³ m/s., ist das Auflagematerial 2 in dem Bereich, an dem sich die Nut 5 befindet mit dem Grundwerkstück 1 verschweißt (Figur 2). Dieses Verfahren wird z. B. bei der Herstellung von Kesseln, Behältern, Rohrleitungen und deren Teile und Apparate und deren Teile angewendet. In Behältern können die Schweißlinien entweder in axialer Richtung oder Umfangsrichtung oder in beiden Richtungen gelegt bzw. vorzugsweise spiralförmig angeordnet werden.

Figur 1 zeigt ein Ausführungsbeispiel mit einer Zwischenlage 6, wobei der Auflagewerkstoff 2 im zu verschweißenden Bereich eine Sicke 3 aufweist. Über der Sicke 3 befindet sich die Sprengschnur bzw. ein Sprengband. Figur 2 zeigt einen nach Figur 1 gefertigten Verbundkörper.

Ein Verfahren, bei dem zwei Auflagebleche überlappend miteinander sowie gleichzeitig mit dem Grundwerkstück verschweißt werden, ist anhand der Figur 3 erläutert. Figur 3 zeigt eine Anordnung mit einer Nut 5, einem ebenen Auflageblech 2 und einem Auflageblech mit Sicke 3, welche übereinander angeordnet sind.

Nach Zündung der Sprengschnur 4 verschweißen das obere und untere Auflageblech 2 miteinander und anschließend mit dem Grundwerkstück 1. Figur 4 zeigt die in Figur 3 dargestellte Ausführungsform nach dem Schweißvorgang.

Die wirtschaftliche Bedeutung eines solchen Überlappungsverfahrens ist darin zu sehen, daß zur Auskleidung eines Autoklaven nicht Bleche des Auflagenmaterials in derselben Größenordnung bereitgestellt werden müssen. Vielmehr ist es möglich, eine Anzahl kleinerer Bleche miteinander zu verschweißen und mit dem Behälter linienhaft zu verbinden, wobei die Nähte in Umfang- und Axialrichtung gelegt werden können.

In der Fertigung von Blechen des Auflagewerkstoffs fällt dieses in beschränkten Breiten als gewalztes Band an. Das Auskleiden großer Autoklaven wird dadurch gelöst, daß im zylindrischen Teil des Autoklaven ein gewalztes Blech (z. B. Tantal-Blech von 200 mm Breite, in einer Dicke zwischen 0,05 und 10 mm) in den Behälter gewendelt eingelegt wird, am Rand mit einer Sicke versehen ist und mit einer ebenfalls spiralig über der Sicke angebrachten Sprengschnur in den zylindrischen Teil des Behälters eingeschweißt wird. Auf diese Weise ist es möglich, einen Autoklaven auf wesentlich wirtschaftlichere Weise mit einem Auflagematerial auszukleiden und gleichzeitig linienhaft zu verschweißen.

Sehr oft ist es im chemischen Apparatebau und in der Energiewirtschaft erforderlich, daß Kühl- oder Heizkanäle für den Wärmeaustausch angebracht werden. Diese Aufgabe wird anhand der geschilderten Linienschweißung dadurch gelöst, daß z. B. in einem zylindrischen Teil eines Behälters ein Auflageblech mit Hilfe einer gewendelten Schweißnaht von der geschilderten Art eingebracht wird und anschließend der nicht geschweißte Raum zwischen Auflageblech und Grundwerkstück mit einem Druckmedium beaufschlagt wird, so daß das Auflageblech zwischen den Schweißnähten in an sich bekannter Weise aufgebläht wird, wodurch die gewünschten Kühlkanäle entstehen. Es versteht sich von selbst, daß auf diese Weise nicht nur gewendelte Kühlkanäle, sondern auch anders geformte, wie z. B. spiralige, mäanderförmige in zylindrischen Teilen von Behältern geformt werden können. Werden mäanderförmige Kühlkanäle in ebenen Blechen auf diese Weise erzeugt, ist das geschilderte Verfahren geeignet, Solarabsorberflächen auf billige Weise zu erzeugen (z. B. aus Aluminium). In Ergänzung zu den aufblasbaren Kanälen sind auch vorgeformte Kanäle verwendbar.

Es besteht die Möglichkeit, für den Apparatebau auch andere Teile als Rohre und Behälter auszuplattieren, so z. B. Halterungen. Alle Beispiele beziehen sich sowohl auf das Auskleiden (innen) als auch auf das Umkleiden (außen). Ebenso besteht die Möglichkeit, Reparaturplattierungen an losen bzw. fest verkleideten Apparaten durchzuführen.

## Patentansprüche

1. Verfahren zum Aus- oder Umkleiden von vorgeformten, dickwandigen Werkstücken (1), wie Rohren, Apparaten, insbesondere für den chemischen Apparatebau, mit mindestens einem dünnen Blech bzw. einer Folie (2) aus hochwertigen metallischen Werkstoffen, wie Ti, Nb, Ta, Zr, Ni, Mo, Pt, Ir, Pd, Rh, Al, Au, Ag und deren Legierungen oder niedrig und hochlegierten Edelstählen durch linienhafte Explosionsschweißung, wobei ein Sprengstoff (4) auf derjenigen Seite des Bleches bzw. der Folie (2) angeordnet wird, die der Verbindungsstelle mit dem vorgeformten Werkstück (1) abgekehrt ist und eine feste Verbindung an dem Werkstück (1) derart erfolgt, daß auf das dünne Blech bzw. die Folie (2) an der zu verschweißenden Stelle Sprengstoff in Form einer Schnur aufgebracht und danach gezündet wird, so daß eine Verbindung mit dem Werkstück (1) nur im Bereich des aufgebrachten Sprengstoffs (4) erfolgt, dadurch gekennzeichnet, daß der Sprengstoff (4) über einem Hohlraum aufgebracht wird, der einerseits durch eine Nut (5) im Werkstück (1) und andererseits durch eine im Bereich der Nut (5) entgegengesetzt verlaufende Wölbung des dünnen Bleches bzw. der Folie (2) gebildet wird.

2. Verfahren nach Anspruch 1, dadurch gekennzeichnet, daß die Wölbung in Form einer Sicke (3) ausgebildet wird.

3. Verfahren nach Anspruch 1 oder 2, dadurch gekennzeichnet, daß zur Aus- oder Umkleidung mehrere dünne Bleche bzw. Folien (2) verwendet werden, wobei die Überlappung im Bereich des Hohlraumes vorgesehen wird.

4. Verfahren nach Anspruch 3, dadurch gekennzeichnet, daß das äußerste der sich an den Stoßbereichen überlappenden Bleche bzw. Folien (2) mit einer Wölbung versehen wird, während der Hohlraum vom innenliegenden Blech bzw. der Folie, die eben ausgebildet ist, als Zwischenmetall unterteilt wird.

5. Verfahren nach einem der vorhergehenden Ansprüche, dadurch gekennzeichnet, daß bei einem rohrförmigen oder zylindrischen Werkstück der Hohlraum wendelförmig verlaufend ausgeführt wird.

6. Verfahren nach einem der vorhergehenden Ansprüche, dadurch gekennzeichnet, daß ein Verbundwerkstoff als Werkstück und/oder als Blech bzw. Folie verwendet wird.

## Claims

1. Method of lining or facing preformed thick-walled workpieces, such as pipes, apparatus, more especially for chemical apparatus construction, with at least one thin sheet or respectively one foil made of high-quality metallic materials, such as Ti, Nb, Ta, Zr, Hi, Mo, Pt, Ir, Pd, Rh, Al, Au, Ag and their alloys or low- and high-alloyed refined steels by linear explosion welding, wherein an explosive is arranged on that side of the sheet or respectively of the foil which is remote from the point of connection to the preformed workpiece and a secure connection on the workpiece is effected, in such a way that explosive in the form of a cord is applied to the thin sheet or respectively the foil at the point to be welded and is then detonated, so that a connection to the workpiece is effected only in the region of the applied explosive, characterised in that the explosive (4) is applied over a cavity which is formed, on the one hand, by a groove (5) in the workpiece (1) and, on the other hand, by a curvature, extending contrarily in the region of the groove, of the thin sheet or respectively of the foil (2).

2. Method according to claim 1, characterised in that the curvature is fashioned in the form of a corrugation (3).

3. Method according to claim 1 or 2, characterised in that several thin sheets or respectively foils (2) are used for the lining or facing, the overlap being provided in the region of the cavity.

4. Method according to claim 3, characterised in that the outermost of the sheets or respectively foils (2) overlapping at the joint regions is provided with a curvature, whilst the cavity is subdivided by the internal sheet or respectively the foil, which is flat, as intermediate metal.

5. Method according to one of the preceding claims, characterised in that in the case of a tubular or cylindrical workpiece the cavity is formed extending helically.

6. Method according to one of the preceding claims, characterised in that composite material is used as workpiece and/or as the sheet or respectively foil.

## Revendications

1. Procédé pour garnir intérieurement ou recouvrir extérieurement des pièces préformées à parois épaisses, telles que des tubes et des appareils, en particulier pour l'ingénierie chimique, avec au moins une tôle mince ou une feuille de matériaux métalliques de haute qualité, tels que Ti, Nb, Zr, Ni, Mo, Pt, Ir, Pd, Rh, Al, Au, Ag et leurs alliages, ou d'aciers fins faiblement ou fortement alliés, par soudage par explosion suivant une ligne, procédé selon lequel on applique un explosif sur le côté de la tôle ou de la feuille opposé à son point de jonction à la pièce préformée et on produit une liaison solide avec la pièce par la disposition d'explosif sous forme d'un cordeau détonant sur la tôle mince ou la feuille, à l'endroit à souder, et que l'on allume ensuite, de manière qu'une liaison avec la pièce s'établisse seulement dans la région où l'explosif à été appliqué, caractérisé en ce que l'on applique l'explosif (4) par-dessus une cavité formée d'une part par une rainure (5) dans la pièce (1) et d'autre part par un renflement de la tôle mince ou de la feuille (2), renflement qui s'étend dans la région de la rainure (5) et en sens inverse à celle-ci.

2. Procédé selon la revendication 1, caractérisé en ce que l'on réalise le renflement sous forme d'une moulure (3).

3. Procédé selon la revendication 1 ou 2, caractérisé en ce que l'on utilise plusieurs tôles minces ou plusieurs feuilles (2) pour le garnissage ou le recouvrement, en prévoyant leur recouvrement dans la région de la cavité.

4. Procédé selon la revendication 3, caractérisé en ce que la tôle ou la feuille (2) extérieure, parmi les tôles ou feuilles (2) qui se recouvrent dans les régions de jonction, est pourvue d'un renflement, tandis que la tôle ou la feuille située à l'intérieur et qui est plane, partage la cavité comme un métal intermédiaire.

5. Procédé selon une des revendications précédentes, caractérisé en ce que la cavité est réalisée à la façon d'une hélice dans le cas d'une pièce tubulaire ou cylindrique.

6. Procédé selon une des revendications précédentes, caractérisé par l'utilisation d'un matériau composite en tant que pièce et/ou en tant que tôle ou feuille.

Fig. 1

Fig. 2

Fig. 3

Fig. 4